# EUROPEAN PATENT APPLICATION

(11) **EP 3 422 210 A1**
(43) Date of publication of application: **02.01.2019**
(21) Application number: 17755738.6
(22) Date of filing: 09.02.2017
(51) Int. Cl.: G06F 17/30

(54) **METHOD, DEVICE, AND SYSTEM FOR PROCESSING DATA IN WEBPAGE**

(30) Priority: 23.02.2016 CN 201610098831
(71) Applicant: Alibaba Group Holding Limited, Grand Cayman (KY)
(72) Inventor: ZHU, Bao, Hangzhou Zhejiang 311121 (CN)
(74) Representative: Conroy, John
(86) International application number: PCT/CN2017/073136
(87) International publication number: WO 2017/143909

(57) **Abstract**

The present application provides a method, device, and system for processing data in a webpage. The method includes: running a predetermined data set synchronization monitoring method based on a trigger signal, and determining, based on a return result of the running data set synchronization monitoring method, whether a data set needs to be synchronized; obtaining mark information of a data set that needs to be synchronized; under a predetermined condition, sending a data synchronization request for the data set corresponding to the mark information; receiving the data synchronization request, obtaining corresponding data to be synchronized based on the data synchronization request, and returning the data to be synchronized to a webpage; and backfilling the corresponding data set by using the data to be synchronized. The method, device, and system for processing data in a webpage in the present application implement data self-management in a webpage and can greatly reduce data maintenance costs and logical complexity.

## Description

The present application claims priority to Chinese Patent Application No. 201610098831.6, filed on February 23, 2016 and entitled "METHOD, DEVICE, AND SYSTEM FOR PROCESSING DATA IN A WEBPAGE", which is incorporated here by reference in its entirety.

### TECHNICAL FIELD

The present application relates to the field of webpage data processing technologies, and in particular, to a method, device, and system for processing data in a webpage.

### BACKGROUND

Traditionally, during webpage updating, a request is sent to a server usually by submitting a form. The server receives the request and processes the form, and then returns an entire new webpage. The present webpage updating method is to update all code in the entire webpage. In actual cases, most of the code of the two webpages before and after the updating is the same, and only a part needs to be updated. Therefore, the traditional webpage updating method updates the code that does not need to be updated, and many bandwidth resources are wasted.

Currently, with the development of front-end technologies, webpages usually use the asynchronous JAVASCRIPT and XML (Ajax) technology. The Ajax technology can send an XML HTTP request to the server for partial webpage data that needs to be synchronized. Correspondingly, the server parses the request and obtains corresponding backfill data for the webpage. The backfill data is correspondingly backfilled in the webpage to complete the partial updating of the webpage data.

In actual application scenarios, it is first necessary to determine which data block in a webpage needs to be synchronized. Then, when the data is updated by using the Ajax technology, an Ajax program is usually needed to send an Ajax data synchronization request to a remote server to request data, and then the server returns the requested data to the webpage. After the webpage parses and backfills the data, the webpage updating can be completed. However, when a plurality of different blocks in the webpage need to be synchronized at the same time, request, processing, and backfill operations of the webpage data need to be separately performed for each block. In actual situations, when a plurality of blocks have concurrent data synchronization requests, maintenance costs and logical complexity of the webpage data request, processing, and backfill links corresponding to the blocks to be synchronized are very high.

### SUMMARY

The purpose of the implementations of the present application is to provide a method, device, and system for processing data in a webpage, to implement data self-management in a webpage, and greatly reduce data maintenance costs and logical complexity.

The present application provides a method for processing data in a webpage. The method includes: running a predetermined data set synchronization monitoring method based on a trigger signal, and determining, based on a return result of the running data set synchronization monitoring method, whether a data set needs to be synchronized; obtaining mark information of a data set that needs to be synchronized; under a predetermined condition, sending a data synchronization request for the data set corresponding to the mark information; receiving the data synchronization request, obtaining corresponding data to be synchronized based on the data synchronization request, and returning the data to be synchronized to a webpage; and backfilling the corresponding data set by using the data to be synchronized.

The present application provides a method for processing data in a webpage. The method includes: running a predetermined data set synchronization monitoring method based on a trigger signal, and determining, based on a return result of the running data set synchronization monitoring method, whether a data set needs to be synchronized; obtaining mark information of a data set that needs to be synchronized; and under a predetermined condition, sending a data synchronization request for the data set corresponding to the mark information.

The present application provides a device for processing data in a webpage. The device includes: a receiving module, configured to receive a trigger signal; a status monitoring module, configured to run a predetermined data set synchronization monitoring method based on the trigger signal, and determine, based on a return result of the running data set synchronization monitoring method, whether a data set needs to be synchronized; a marking module, configured to obtain mark information of a data set that needs to be synchronized; and a request sending module, configured to: under a predetermined condition, send a data synchronization request for the data set corresponding to the mark information.

The present application provides a system for processing data in a webpage. The system includes: a receiving module, configured to receive a trigger signal; a status monitoring module, configured to run a predetermined data set synchronization monitoring method based on the trigger signal, and determine, based on a return result of the running data set synchronization monitoring method, whether a data set needs to be synchronized; a marking module, configured to obtain mark information of a data set that needs to be synchronized; a request sending module, configured to: under a predetermined condition, send a data synchronization request for the data set corresponding to the mark information; a request processing module, configured to receive the data synchronization request, obtain corresponding data to be synchronized based on the data synchronization request, and return the data to be synchronized to a webpage; and a backfilling module, configured to backfill the corresponding data set by using the data to be synchronized.

It can be seen from the technical solutions provided in the implementations described above that, whether the data set needs to be synchronized is determined based on the return result of the running data set synchronization monitoring method, and the mark information of the data set that needs to be synchronized is obtained. Further, data sets that need to be synchronized are combined into one data synchronization request to partially update the webpage data. During the entire webpage data set synchronization process, whether to perform synchronization and when to send the data synchronization request are determined based on the predetermined identifier. Synchronization of a specified data set can be completed based on the data synchronization request, thereby implementing data self-management and reducing data maintenance costs. In particular, when the data sets that need to be synchronized are combined into one data synchronization request, the number of data synchronization requests is greatly reduced, and logical complexity of data maintenance can be greatly reduced. After the requests are combined, the number of requests can be greatly reduced, thereby reducing the total network transmission time and improving webpage performance.

### BRIEF DESCRIPTION OF DRAWINGS

To describe the technical solutions in the implementations of the present application or in the existing technologies more clearly, the following briefly describes the accompanying drawings needed for describing the implementations or the existing technologies. Apparently, the accompanying drawings in the following description merely show some implementations of the present application, and a person of ordinary skill in the art can still derive other drawings from these accompanying drawings without creative efforts.
FIG. 1 is a flowchart illustrating a method for processing data in a webpage, according to an implementation of the present application.
FIG. 2 is a flowchart illustrating a method for processing data in a webpage, according to an implementation of the present application.
FIG. 3 is a schematic diagram illustrating a device for processing data in a webpage, according to an implementation of the present application.
FIG. 4 is a schematic diagram illustrating a system for processing data in a webpage, according to an implementation of the present application.

### DESCRIPTION OF EMBODIMENTS

To make a person skilled in the art understand the technical solutions in the present application better, the following clearly and completely describes the technical solutions in the implementations of the present application with reference to the accompanying drawings in the implementations of the present application. Apparently, the described implementations are merely some, but not all of the implementations of the present application. All other implementations obtained by a person of ordinary skill in the art based on the implementations of the present application without creative efforts shall fall within the protection scope of the present application.

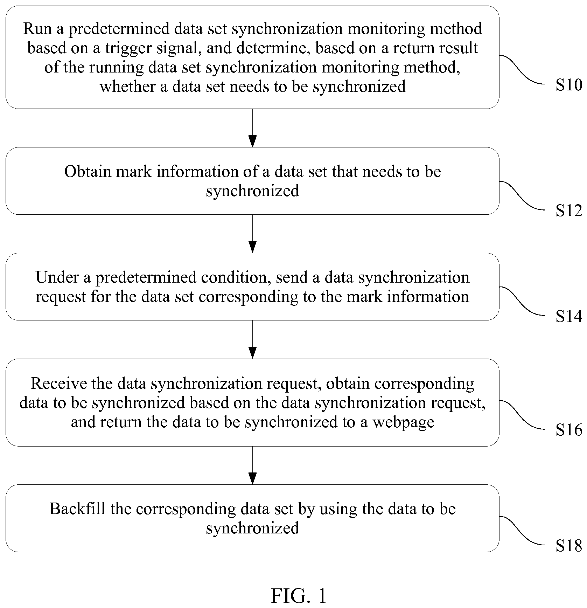

The following describes in detail a method, device, and system for processing data in a webpage in the present application with reference to the accompanying drawings. FIG. 1 is a flowchart illustrating a method for processing data in a webpage, according to an implementation of the present application. Although the present application provides operational steps of a method or a structure of an apparatus shown in the following implementations or the accompanying drawings, the method or the apparatus can include, based on a conventional or non-creative effort, more operational steps or module units or fewer operational steps or module structures. For steps or structures that have no necessary logical causal relationship, an execution sequence of the steps or a module structure of the apparatus is not limited to an execution sequence or a module structure shown in the implementations of the present application. When the method or the module structure is executed by an apparatus or a terminal product in actual application, the method or the module structure can be executed based on the sequence of the method or the module structure in the implementations or accompanying drawings or can be executed in parallel (for example, a parallel processor or a multi-thread processing environment).

Referring to FIG. 1, a method for processing data in a webpage provided in an implementation of the present application can include the following steps.

Step S10: Run a predetermined data set synchronization monitoring method based on a trigger signal, and determine, based on a return result of the running data set synchronization monitoring method, whether a data set needs to be synchronized.

Generally, a webpage includes data, and the data can be content to be presented in the webpage. The content of the webpage data can vary with actual service needs. For example, the content can include characters, pictures, tables, or GIFs, which is not limited here in the present application.

In the present implementation, the webpage data can be divided based on a predetermined division rule to obtain a data set having a predetermined data parsing format. The webpage data can be divided into a plurality of data sets by using the predetermined division rule based on actual service dimensions. For example, when the actual service is an R&D process system, based on service dimensions, the webpage data can be divided into data sets such as a basic project information data set, a project process information data set, a process to do data set, a code repo information data set, and a development server information data set. Certainly, the predetermined division rule is not limited to the previous description. A technical person in the art can further make other variations with the inspiration of the technical essence of the present application, which should fall within the protection scope of the present application provided that functions and effects of the variations are the same as or similar to those in the present application.

In the present implementation, each data set can have a predetermined data parsing format. The predetermined data parsing format can include a universal set that completely describes and parses a current status. For example, the data parsing format of the server data set can include a server name, process information, or status information. The status information in the data parsing format can be used to indicate a status of parsing the data set, and other information can be used to describe other attributes of the data set. Certainly, the predetermined data parsing format is not limited to the previous description. A technical person in the art can further make other variations with the inspiration of the technical essence of the present application, which should fall within the protection scope of the present application provided that functions and effects of the variations are the same as or similar to those in the present application.

In the present implementation, a corresponding return result can be obtained by running the predetermined data set synchronization monitoring method for each data set. The return result can be a predetermined identifier used to indicate whether the data set needs to be synchronized. The predetermined identifier can include a first identifier and a second identifier. The first identifier can be used to indicate that a state of a corresponding data set is a to-be-synchronized state, and the second identifier can be used to indicate that a corresponding data set is in a stable state and does not need to be synchronized. A detailed form of the predetermined identifier can be numerals 1 and 0, or can be characters "true", "false", etc., which is not limited in the present application.

In a detailed implementation, an interface that can be invoked can be set for each data set in the predetermined data set synchronization monitoring method. The interface can be an object-oriented interface, and is internally encapsulated with logic used to determine a state of a corresponding data set. The interface can determine whether a detailed state of a data set is stable or unstable. When a data set is in a stable state, it indicates that the data set currently does not need to be synchronized. When the data set is in an unstable state, it indicates that the data set currently needs to be synchronized. When a peripheral invokes the interface, a corresponding Boolean value can be fed back to the peripheral. When the Boolean value is "false", it indicates that the current data set is stable and does not need to be synchronized. When the Boolean value is "true", it indicates that the current data set is unstable and needs to be synchronized. When determining whether a data set needs to be synchronized, the interface can compare the status information of the data set with predetermined information stored in the data set, to determine whether the status information satisfies a synchronization requirement of the data set. The status information of the data set and the predetermined information can vary with an actual service and scenario, and are not limited here in the present application. Taking the server data set as an example, the predetermined information can be "no data is obtained", "during deployment", or "during allocation". When the status information is one of the previous predetermined information, it can be determined that the data set satisfies the synchronization requirement of the data set, and "true" is correspondingly returned. When the status information does not match the previous predetermined information, it can be determined that the data set does not satisfy the synchronization requirement of the data set, and "false" is correspondingly returned.

In the present implementation, a predetermined identifier of each data set in the webpage can be monitored based on a trigger signal, to determine whether the data set needs to be synchronized. In a detailed implementation, the trigger signal can be a periodical trigger signal. For example, a periodical monitoring module can be disposed in the webpage. Each data set is correspondingly configured with the interface. The periodical monitoring module can automatically invoke an interface corresponding to each data set based on a predetermined period. When being invoked, for a corresponding data set, the interface returns a predetermined identifier used to indicate the state of the data set to the monitoring module. In another detailed implementation, the trigger signal can be a specified trigger signal. For example, a corresponding function button is set in the webpage. When a user clicks the function button based on an actual requirement, a trigger signal can be sent to drive a corresponding monitoring module to invoke an interface corresponding to each data set to obtain a corresponding predetermined identifier.

Step S12: Obtain mark information of a data set that needs to be synchronized.

In the present implementation, after a data set that needs to be synchronized is monitored, the data set can be marked to obtain mark information of the data set in a to-be-synchronized state. The mark information is used to uniquely represent the data set that needs to be synchronized. The mark information can be the name of the data set, a number specified based on a predetermined rule, etc. Certainly, the detailed form of the mark information is not limited to the previous description. A technical person in the art can further make other variations with the inspiration of the technical essence of the present application, which should fall within the protection scope of the present application provided that functions and effects of the variations are the same as or similar to those in the present application.

Step S14: Under a predetermined condition, send a data synchronization request for the data set corresponding to the mark information.

In the present implementation, the predetermined condition can be: predetermined duration is reached since the first piece of mark information is obtained; the number of pieces of mark information reaches a predetermined number; a specified sending signal is received; or a combination of a plurality of the previous conditions, which is not limited here.

A periodical monitoring module can be disposed in the webpage, for example, a timer. When the periodical monitoring module monitors a predetermined identifier indicating that a data set needs to be synchronized, and correspondingly obtains mark information of the data set, the periodical monitoring module can send a data synchronization request for the data set corresponding to the mark information at a moment that reaches the predetermined duration since the first piece of mark information is obtained. The predetermined duration can be set based on an actual service requirement, for example, can be one second, three seconds, or five seconds, which is not limited here in the present application. In addition, the periodical monitoring module can also have a counting function. For example, the periodical monitoring module can count the mark information, and when the number of pieces of mark information reaches the predetermined number, send a data synchronization request for a data set corresponding to the mark information. The predetermined number can be set based on an actual service requirement, for example, can be 3, 5, or 7, which is not limited here in the present application. Certainly, a corresponding sending button can also be disposed in the webpage. When the sending button is clicked, a specified sending signal can be triggered. After receiving the sending signal, a corresponding request sending module can send a data synchronization request for the data set corresponding to the mark information.

In the present implementation, the data synchronization request can be an Ajax request. Data communication between a browser and a server can be implemented by using another technical method such as websocket, long link, etc., which is not limited here in the present application. The data synchronization request can include a parsing parameter corresponding to the data set, for example, the mark information of the data set and content that needs to be synchronized in the data set. In addition, the data synchronization request can further include address information of a processing server, which is used to accurately send the data synchronization request to the processing server.

Step S16: Receive the data synchronization request, obtain corresponding data to be synchronized based on the data synchronization request, and return the data to be synchronized to a webpage.

In the present implementation, the data synchronization request can be sent to a predetermined processing server. When receiving the data synchronization request, the predetermined processing server can first parse the data synchronization request to obtain a corresponding parsing parameter. The parsing parameter can include mark information of a data set to be synchronized, data content that needs to be synchronized in the data set, corresponding address information in the webpage, etc.

After parsing the data synchronization request, the processing server can obtain, based on the parameter obtained through parsing, the data to be synchronized and needed by the data set. The data to be synchronized can be obtained from a local database, can be obtained from an interface of another system, or can be obtained after the processing server performs a plurality of times of query, which is not limited here in the present application. After obtaining the data to be synchronized and needed by the data set, the processing server can return the data to be synchronized to the webpage.

Step S18: Backfill the corresponding data set by using the data to be synchronized.

In the present implementation, after the webpage receives the data to be synchronized, a corresponding data backfilling module can be used to correspondingly backfill the data to be synchronized. The data set to be synchronized can include mark information in the process of requesting synchronization, obtaining data by the processing server, and the webpage backfilling, to ensure that when a plurality of data sets are updated synchronously, the data can be correctly backfilled.

In the present implementation of the present application, whether the data set needs to be synchronized is determined based on the return result of the running data set synchronization monitoring method, and the mark information of the data set that needs to be synchronized is obtained. Further, data sets that need to be synchronized are combined into one data synchronization request to partially update the webpage data. During the entire webpage data set synchronization process, whether to perform synchronization and when to send the data synchronization request are determined based on the predetermined identifier. Synchronization of the specified data set can be completed based on the data synchronization request, thereby implementing data self-management and reducing data maintenance costs. In particular, when the data sets that need to be synchronized are combined into one data synchronization request, the number of data synchronization requests is greatly reduced, and logical complexity of data maintenance can be greatly reduced. After the requests are combined, the number of HTTP requests can be greatly reduced, thereby reducing the total network transmission time. Correspondingly, parsing times of DNS routing, TCP handshake times, etc. can be reduced, and webpage performance can be improved.

The following describes an implementation of a method for processing data in a webpage by a webpage end in the present application.

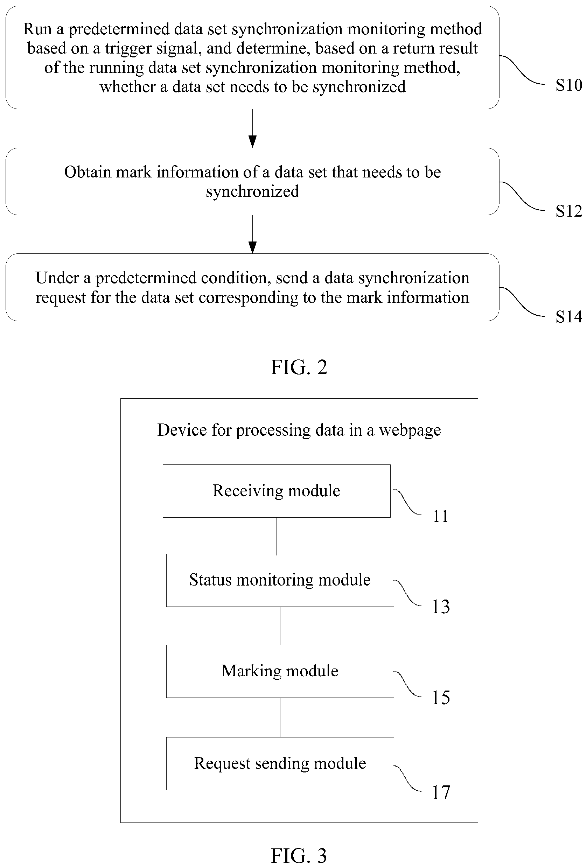

Referring to FIG. 2, a method for processing data in a webpage provided in an implementation of the present application can include the following steps.

Step S10: Run a predetermined data set synchronization monitoring method based on a trigger signal, and determine, based on a return result of the running data set synchronization monitoring method, whether a data set needs to be synchronized.

Generally, a webpage includes data, and the data can be content to be presented in the webpage. The content of the webpage data can vary with actual service needs. For example, the content can include characters, pictures, tables, or GIFs, which is not limited here in the present application.

In the present implementation, the webpage data can be divided based on a predetermined division rule to obtain a data set having a predetermined data parsing format. The webpage data can be divided into a plurality of data sets by using the predetermined division rule based on actual service dimensions. For example, when the actual service is an R&D process system, based on service dimensions, the webpage data can be divided into data sets such as a basic project information data set, a project process information data set, a process to do data set, a code repo information data set, and a development server information data set. Certainly, the predetermined division rule is not limited to the previous description. A technical person in the art can further make other variations with the inspiration of the technical essence of the present application, which should fall within the protection scope of the present application provided that functions and effects of the variations are the same as or similar to those in the present application.

In the present implementation, each data set can have a predetermined data parsing format. The predetermined data parsing format can include a universal set that completely describes and parses a current status. For example, the data parsing format of the server data set can include a server name, process information, or status information. The status information in the data parsing format can be used to indicate a status of parsing the data set, and other information can be used to cooperate to describe other attributes of the data set. Certainly, the predetermined data parsing format is not limited to the previous description. A technical person in the art can further make other variations with the inspiration of the technical essence of the present application, which should fall within the protection scope of the present application provided that functions and effects of the variations are the same as or similar to those in the present application.

In the present implementation, a corresponding return result can be obtained by running the predetermined data set synchronization monitoring method for each data set. The return result can be a predetermined identifier used to indicate whether the data set needs to be synchronized. The predetermined identifier can include a first identifier and a second identifier. The first identifier can be used to indicate that a state of a corresponding data set is a to-be-synchronized state, and the second identifier can be used to indicate that a corresponding data set is in a stable state and does not need to be synchronized. A detailed form of the predetermined identifier can be numerals 1 and 0, or can be characters "true", "false", etc., which is not limited in the present application.

In a detailed implementation, an interface that can be invoked can be set for each data set in the predetermined data set synchronization monitoring method. The interface can be an object-oriented interface, and is internally encapsulated with logic used to determine a state of a corresponding data set. The interface can determine whether a detailed state of a data set is stable or unstable. When a data set is in a stable state, it indicates that the data set currently does not need to be synchronized. When the data set is in an unstable state, it indicates that the data set currently needs to be synchronized. When a peripheral invokes the interface, a corresponding Boolean value can be fed back to the peripheral. When the Boolean value is "false", it indicates that the current data set is stable and does not need to be synchronized. When the Boolean value is "true", it indicates that the current data set is unstable and needs to be synchronized. When determining whether a data set needs to be synchronized, the interface can compare the status information of the data set with predetermined information stored in the data set, to determine whether the status information satisfies a synchronization requirement of the data set. The status information of the data set and the predetermined information can vary with an actual service and scenario, and are not limited here in the present application. Taking the server data set as an example, the predetermined information can be "no data is obtained", "during deployment", or "during allocation". When the status information is one of the previous predetermined information, it can be determined that the data set satisfies the synchronization requirement of the data set, and "true" is correspondingly returned. When the status information does not match the previous predetermined information, it can be determined that the data set does not satisfy the synchronization requirement of the data set, and "false" is correspondingly returned.

In the present implementation, a predetermined identifier of each data set in the webpage can be monitored based on a trigger signal, to determine whether the data set needs to be synchronized. In a detailed implementation, the trigger signal can be a periodical trigger signal. For example, a periodical monitoring module can be disposed in the webpage. Each data set is correspondingly configured with the interface. The periodical monitoring module can automatically invoke an interface corresponding to each data set based on a predetermined period. When being invoked, for a corresponding data set, the interface returns a predetermined identifier used to indicate the state of the data set to the monitoring module. In another detailed implementation, the trigger signal can be a specified trigger signal. For example, a corresponding function button is set in the webpage. When a user clicks the function button based on an actual requirement, a trigger signal can be sent to drive a corresponding monitoring module to invoke an interface corresponding to each data set to obtain a corresponding predetermined identifier.

Step S12: Obtain mark information of a data set that needs to be synchronized.

In the present implementation, after a data set that needs to be synchronized is monitored, the data set can be marked to obtain mark information of the data set in a to-be-synchronized state. The mark information is used to uniquely represent the data set that needs to be synchronized. The mark information can be the name of the data set, a number specified based on a predetermined rule, etc. Certainly, the detailed form of the mark information is not limited to the previous description. A technical person in the art can further make other variations with the inspiration of the technical essence of the present application, which should fall within the protection scope of the present application provided that functions and effects of the variations are the same as or similar to those in the present application.

Step S14: Under a predetermined condition, send a data synchronization request for the data set corresponding to the mark information.

In the present implementation, the predetermined condition can be: predetermined duration is reached since the first piece of mark information is obtained; or the number of pieces of mark information reaches a predetermined number; or a specified sending signal is received; or a combination of a plurality of the previous conditions, which is not limited here.

A periodical monitoring module can be disposed in the webpage, for example, a timer. When the periodical monitoring module monitors a predetermined identifier indicating that a data set needs to be synchronized, and correspondingly obtains mark information of the data set, the periodical monitoring module can send a data synchronization request for the data set corresponding to the mark information at a moment that reaches the predetermined duration since the first piece of mark information is obtained. The predetermined duration can be set based on an actual service requirement, for example, can be one second, three seconds, or five seconds, which is not limited here in the present application. In addition, the periodical monitoring module can also have a counting function. For example, the periodical monitoring module can count the mark information, and when the number of pieces of mark information reaches the predetermined number, send a data synchronization request for a data set corresponding to the mark information. The predetermined number can be set based on an actual service requirement, for example, can be 3, 5, or 7, which is not limited here in the present application. Certainly, a corresponding send button can also be disposed in the webpage. When the send button is clicked, a specified sending signal can be triggered. After receiving the sending signal, a corresponding request sending module can send a data synchronization request for the data set corresponding to the mark information.

In the present implementation, the data synchronization request can be an Ajax request. Data communication between a browser and a server can be implemented by using another technical method such as websocket, long link, etc., which is not limited here in the present application. The data synchronization request can include a parsing parameter corresponding to the data set, for example, the mark information of the data set and content that needs to be synchronized in the data set. In addition, the data synchronization request can further include address information of a processing server, which is used to accurately send the data synchronization request to the processing server.

In the present implementation of the present application, whether the data set needs to be synchronized is determined based on the return result of the running data set synchronization monitoring method, and the mark information of the data set that needs to be synchronized is obtained. Further, data sets that need to be synchronized are combined into one data synchronization request to partially update the webpage data. During the entire webpage data set synchronization process, whether to perform synchronization and when to send the data synchronization request are determined based on the predetermined identifier, thereby implementing data self-management and reducing data maintenance costs. In particular, when the data sets that need to be synchronized are combined into one data synchronization request, the number of data synchronization requests is greatly reduced, and logical complexity of data maintenance can be greatly reduced. After the requests are combined, the number of HTTP requests can be greatly reduced, thereby reducing the total network transmission time. Correspondingly, parsing times of DNS routing, TCP handshake times, etc. can be reduced, and webpage performance can be improved.

Based on the method for processing data in a webpage described in the previous implementations, the present application further provides a device for processing data in a webpage.

Referring to FIG. 3, the device for processing data in a webpage can include: a receiving module 11, configured to receive a trigger signal; a status monitoring module 13, configured to run a predetermined data set synchronization monitoring method based on the trigger signal, and determine, based on a return result of the running data set synchronization monitoring method, whether a data set needs to be synchronized; a marking module 15, configured to obtain mark information of a data set that needs to be synchronized; and a request sending module 17, configured to: under a predetermined condition, send a data synchronization request for the data set corresponding to the mark information.

In another implementation of the device for processing data in a webpage, the predetermined condition can include at least one of the following:

Recording time reaches predetermined duration; and the number of pieces of mark information reaches a predetermined number.

In another implementation of the device for processing data in a webpage, the trigger signal includes one of a specified trigger signal and a periodical trigger signal.

The device for processing data in a webpage disclosed in the previous implementation is corresponding to an implementation of the method for processing data in a webpage of the present application, and can implement the implementation of the method for processing data in a webpage in the present application and achieve technical effects of the method implementation.

Based on the method for processing data in a webpage described in the previous implementations, the present application further provides a system for processing data in a webpage.

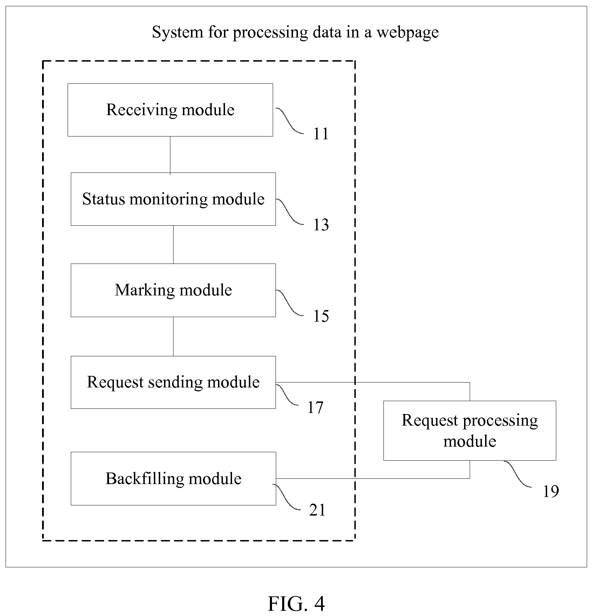

Referring to FIG. 4, the system for processing data in a webpage can include: a receiving module 11, configured to receive a trigger signal; a status monitoring module 13, configured to run a predetermined data set synchronization monitoring method based on the trigger signal, and determine, based on a return result of the running data set synchronization monitoring method, whether a data set needs to be synchronized; a marking module 15, configured to obtain mark information of a data set that needs to be synchronized; a request sending module 17, configured to: under a predetermined condition, send a data synchronization request for the data set corresponding to the mark information; and a request processing module 19, configured to receive the data synchronization request, obtain corresponding data to be synchronized based on the data synchronization request, and return the data to be synchronized to a webpage; and a backfilling module 21, configured to backfill the corresponding data set by using the data to be synchronized.

The system for processing data in a webpage disclosed in the previous implementation is corresponding to an implementation of the method for processing data in a webpage of the present application, and can implement the implementation of the method for processing data in a webpage in the present application and achieve technical effects of the method implementation.

The above description in the implementations of the present application is merely application of some implementations of the present application, and an implementation slightly modified based on some standards and methods can also be used to implement the solutions in the implementations of the present application. Certainly, other non-creative changes in accordance with steps of the processing method in the implementations of the present application can still be used to implement the same application. Details are not described here.

Although the present application provides the method operational steps in the implementations or the flowcharts, more or fewer operational steps can be included based on conventional or noncreative efforts. A sequence of the steps enumerated in the implementations is merely one of execution sequences of the steps, and does not represent that it is the only execution sequence. When the method is executed by a device or a client product in actual application, the method can be executed based on the sequence of the method in the implementations or accompanying drawings or can be executed in parallel (for example, a parallel processor or a multi-thread processing environment).

The devices or modules described in the above implementations can be implemented by a computer chip or an entity, or implemented by a product with a certain function. For ease of description, the previous device is described by dividing the functions into various modules. Certainly, when the present application is implemented, the functions of all modules can be implemented in one or more pieces of software and/or hardware. Certainly, a module that implements a certain function can be implemented by using a combination of a plurality of submodules or subunits.

The method, device, or module in the present application can be implemented by using computer-readable program code. A controller can be implemented in any appropriate way. For example, the controller can take the form of, for example, a microprocessor or a processor and a computer-readable medium storing computer-readable program code (such as software or firmware) that can be executed by the microprocessor or the processor, a logic gate, a switch, an application specific integrated circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A memory controller can also be implemented as a part of control logic of a memory. A person skilled in the art also knows that, in addition to implementing the controller by using the computer-readable program code, logic programming can be performed on method steps to allow the controller to implement the same function in forms of the logic gate, the switch, the programmable logic controller, the programmable logic controller, and the embedded microcontroller. Therefore, the controller can be considered as a hardware component, and a device included in the controller and used to implement various functions can also be considered as a structure in the hardware component. Or, the device configured to implement various functions can even be considered as both a software module implementing the method and a structure in the hardware component.

Some modules of the device in the present application can be described in the general context of a computer executable instruction executed by a computer, for example, a program module. Generally, the program module includes a routine, a program, an object, a component, a data structure, a type, etc. that executes a specific task or implements a specific abstract data type. The present application can also be practiced in distributed computing environments. In the distributed computing environments, tasks are performed by remote processing devices connected through a communications network. In a distributed computing environment, the program module can be located in both local and remote computer storage media including storage devices.

It can be seen from description of the implementations that, a person skilled in the art can clearly understand that the present application can be implemented by using software in addition to a necessary hardware. Based on such an understanding, the technical solutions of the present application essentially, or the part contributing to the existing technologies can be implemented in the form of a software product or can be implemented during a data migration implementation process. The computer software product can be stored in a storage medium, such as a ROM/RAM, a magnetic disk, or an optical disc, and includes several instructions for instructing a computer device (which can be a personal computer, a mobile terminal, a server, a network device, etc.) to perform the methods described in the implementations of the present application or some parts of the implementations.

The implementations in this specification are all described progressively. For same or similar parts in the implementations, reference can be made to each other, and each implementation focuses on a difference from other implementations. All or some of the present application can be used in many general-purpose or dedicated computer system environments or configurations, for example, a personal computer, a server computer, a handheld device or a portable device, a tablet device, a mobile communications terminal, a multiprocessor system, a microprocessor system, a programmable electronic device, a network PC, a small computer, a mainframe computer, and a distributed computing environment including any of the above systems or devices.

The implementations in this specification are all described progressively. For same or similar parts in the implementations, reference can be made to each other, and each implementation focuses on a difference from other implementations. Particularly, for a server implementation, work executed by its processor is similar to that in the method implementation, and therefore is described briefly. For related parts, refer to the descriptions in the method implementation.

In the present application, a plurality of implementations of the present application are described, and a person skilled in the art can understand that the implementations in the present application can be combined with each other. In addition, a person of ordinary skill in the art knows that many modifications and variations of the present application can be made without departing from the spirit of the present application. It is intended that the claims include these modifications and variations without departing from the spirit of the present application.

## Claims

1. A method for processing data in a webpage, comprising:
running a predetermined data set synchronization monitoring method based on a trigger signal, and determining, based on a return result of the running data set synchronization monitoring method, whether a data set needs to be synchronized;
obtaining mark information of a data set that needs to be synchronized;
under a predetermined condition, sending a data synchronization request for the data set corresponding to the mark information;
receiving the data synchronization request, obtaining corresponding data to be synchronized based on the data synchronization request, and returning the data to be synchronized to a webpage; and
backfilling the corresponding data set by using the data to be synchronized.

2. The method according to claim 1, wherein the predetermined condition comprises at least one of the following:
predetermined duration is reached since the first piece of mark information is obtained; and
the number of pieces of mark information reaches a predetermined number.

3. The method according to claim 1, wherein the trigger signal comprises at least one of a specified trigger signal and a periodical trigger signal.

4. A method for processing data in a webpage, comprising:
running a predetermined data set synchronization monitoring method based on a trigger signal, and determining, based on a return result of the running data set synchronization monitoring method, whether a data set needs to be synchronized;
obtaining mark information of a data set that needs to be synchronized; and
under a predetermined condition, sending a data synchronization request for the data set corresponding to the mark information.

5. The method according to claim 4, wherein the predetermined condition comprises at least one of the following:
predetermined duration is reached since the first piece of mark information is obtained; and
the number of pieces of mark information reaches a predetermined number.

6. The method according to claim 4, wherein the trigger signal comprises at least one of a specified trigger signal and a periodical trigger signal.

7. A device for processing data in a webpage, comprising:
a receiving module, configured to receive a trigger signal;
a status monitoring module, configured to run a predetermined data set synchronization monitoring method based on the trigger signal, and determine, based on a return result of the running data set synchronization monitoring method, whether a data set needs to be synchronized;
a marking module, configured to obtain mark information of a data set that needs to be synchronized; and
a request sending module, configured to: under a predetermined condition, send a data synchronization request for the data set corresponding to the mark information.

8. The device according to claim 7, wherein the predetermined condition comprises at least one of the following:
predetermined duration is reached since the first piece of mark information is obtained; and
the number of pieces of mark information reaches a predetermined number.

9. The device according to claim 7, wherein the trigger signal comprises one of a specified trigger signal and a periodical trigger signal.

10. A system for processing data in a webpage, comprising:
a receiving module, configured to receive a trigger signal;
a status monitoring module, configured to run a predetermined data set synchronization monitoring method based on the trigger signal, and determine, based on a return result of the running data set synchronization monitoring method, whether a data set needs to be synchronized;
a marking module, configured to obtain mark information of a data set that needs to be synchronized;
a request sending module, configured to: under a predetermined condition, send a data synchronization request for the data set corresponding to the mark information;
a request processing module, configured to receive the data synchronization request, obtain corresponding data to be synchronized based on the data synchronization request, and return the data to be synchronized to a webpage; and
a backfilling module, configured to backfill the corresponding data set by using the data to be synchronized.
